# FASCICULE DE BREVET EUROPEEN

(11) **EP 0 959 280 B1**
(45) Date de publication et mention de la délivrance du brevet: **19.11.2003**
(21) Numéro de dépôt: 99401140.1
(22) Date de dépôt: 10.05.1999
(51) Int. Cl.: F16K 11/065, F15B 13/00

(54) **Ensemble modulaire de distribution pneumatique**
Modulare Pneumatikventilanordnung
Modular pneumatic valve arrangement

(30) Priorité: 19.05.1998 FR 9806300
(43) Date de publication de la demande: 24.11.1999
(73) Titulaire: Parker Hannifin Rak S.A., 74112 Annemasse Cedex (FR)
(72) Inventeur: Bouteille, Daniel, 78220 Viroflay (FR)
(74) Mandataire: Robert, Jean-Pierre

(56) Documents cités:
- CH-A- 426 409
- DE-A- 2 606 475
- US-A- 2 976 886
- US-A- 3 877 483

## Description

La présente invention concerne un ensemble modulaire de distribution pneumatique comportant une pluralité de modules chacun formé par un distributeur pneumatique fixé à une embase, les modules étant réunis en ensemble par leur embase.

En automatisation pneumatique et électropneumatique, l'association des distributeurs en blocs fonctionnels traversés chacun par un conduit commun de pression et un ou deux conduits communs d'échappement, est devenue une pratique généralisée qui simplifie notablement la mise en oeuvre des distributeurs et conduit à des installations particulièrement rationnelles.

Pour chaque groupe de vérins et actionneurs pneumatiques sur l'installation, un bloc fonctionnel est constitué, comprenant autant de distributeurs qu'il y a d'actionneurs ou de vérins à commander séparément. Ce bloc fonctionnel, implanté à proximité des vérins, n'a besoin que d'une seule alimentation en pression et d'une seule ou de deux collectes d'échappement. En outre, dans les versions les plus récentes, ce bloc fonctionnel peut aussi recevoir toutes les commandes et l'alimentation électriques au moyen d'un câble unique à conducteurs multiples raccordés par prises embrochables.

Dans la pratique, les vérins et actionneurs pneumatiques, disposés sur une même installation, sont de tailles variées et leurs besoins en air comprimé peuvent être très différents. En principe, à chaque vérin doit être associé un distributeur de calibre correspondant à sa taille et ses besoins en débit d'air. C'est en général ce qui est réalisé et cette optimisation du calibre constitue une limite à la réalisation de blocs fonctionnels homogènes. En effet, dans un groupe de vérins et actionneurs pneumatiques destinés à être associés à un seul groupe fonctionnel, les vérins sont en général hétérogènes et les constructeurs n'ont pu jusqu'à présent proposer que des associations de distributeurs de calibres identiques, obligeant à un surdimensionnement coûteux des distributeurs destinés aux vérins les plus petits du groupe.

C'est l'un des buts de la présente invention que de proposer des solutions pour résoudre ce problème, c'est-à-dire pour pouvoir associer dans un même bloc fonctionnel des distributeurs de calibre différents.

L'invention est née de la constatation selon laquelle la quasi-totalité des besoins en débit d'air comprimé des installations pneumatiques automatisées était satisfaite par des sections de passage comprises entre 12 50 mm² voire, pour la grande majorité, entre 12 et 38 mm², ce qui correspond à un diamètre intérieur de tube de liaison entre distributeurs et vérins compris entre 2 et 7, voire 8 mm. A partir de cette constatation, le parti fut pris de satisfaire l'ensemble de ces besoins en proposant un nombre réduit de calibres de distributeurs, par exemple deux calibres de distributeurs : un premier calibre qui présente une section de passage interne du fluide pneumatique de 12 mm² et un second calibre qui présente une section de passage interne du fluide pneumatique de 36 mm². Le premier calibre pourra satisfaire les demandes en fluide pneumatique de vérins de diamètres allant de 6 mm à 35 mm environ. Il pourra recevoir des tubes de liaison dont le diamètre interne variera entre 2 et 4 mm avec un diamètre extérieur de 4 et 6 mm. Le second calibre est destiné à satisfaire les besoins en air comprimé de vérins de diamètres allant de 35 à 120 mm. Les tubes de liaison seront d'un diamètre intérieur de 6 ou 7 mm et d'un diamètre extérieur de 8 ou 10 mm.

Bien entendu, ces valeurs chiffrées ne sont données qu'à titre d'exemple qui est un compromis optimal pour satisfaire le plus grand nombre de besoins avec le minimum de matériel mais on peut considérer que, dans le même esprit, alors que le premier calibre n'est pas inférieur à 12 mm², le second calibre sera choisi à 50 mm² (diamètre interne du tube de 8 mm). On peut également choisir trois calibres avec respectivement, par exemple, des sections de passage de 12, 30 et 48 mm².

Dans cet esprit donc et en ayant choisi une technique de commutation particulière, on peut grâce à la présente invention constituer un ensemble modulaire de distribution pneumatique, c'est-à-dire qu'on peut assembler directement des modules de distribution ayant des calibres différents pour constituer un îlot unique de distribution en lui procurant un caractère esthétique.

A cet effet, l'invention a donc pour objet un ensemble modulaire de distribution pneumatique comportant une pluralité de modules, chacun formé par un distributeur pneumatique fixé à une embase qui comprend au moins un tronçon de conduit commun de pression et un tronçon de conduit d'échappement et des moyens de fixation à une embase adjacente, remarquable en ce que chaque distributeur est un distributeur à tiroir plan communiquant avec son embase associée au travers de trois orifices de distribution et d'un orifice de pression et dont le tiroir est parallèle à la direction des conduits communs de pression et d'échappement des embases, en ce qu'au moins deux distributeurs de l'ensemble sont de calibres différents, l'un ayant des orifices de distribution d'une section égale à au moins deux fois la section des orifices de distribution de l'autre, et en ce que le profil extérieur de la section de chaque module par un plan perpendiculaire à l'axe de son tiroir est identique quel que soit le calibre du distributeur.

L'identité de cette section transversale de chaque module quel que soit son calibre, est le moyen qui permet de réaliser un ensemble par association directe des embases de chaque module. Cette identité de section ne peut être obtenue que parce que d'une part la technique de commutation est une technique à tiroir plan, technique aujourd'hui délaissée au profit d'une technique à tiroir cylindrique et, d'autre part par le parti pris comme exposé précédemment de satisfaire la majorité des besoins en débit d'air comprimé d'une installation pneumatique au moyen d'un nombre réduit de calibres comprenant au minimmum deux calibres dont le plus grand offre une section de passage au moins égale à deux fois celle de l'autre.

Dans la réalisation préférée de l'invention, le distributeur de plus petit calibre a pour section de passage interne 12mm². Cette section correspond à l'usage extrêmement répandu dans le domaine des automatismes pneumatiques des tubes de diamètre intérieur 4 mm (6 mm extérieur) et à leur équivalent aux Etats-Unis de diamètre extérieur égal à 1/4 de pouce.

Selon l'invention, les orifices de distribution de chaque distributeur sont en forme de lumières allongées dont la plus grande dimension est orthogonale à l'axe du tiroir et est identique pour les distributeurs de calibres différents, la largeur des lumières d'un distributeur de l'ensemble étant au moins double de celle des lumières du distributeur de plus petit calibre.

On comprend que lorsqu'on veut passer de l'un à l'autre de ces calibres, on obtient une variation de section importante des orifices de distribution en jouant uniquement sur la largeur de ceux-ci si bien qu'on obtient une grande augmentation de cette section par une augmentation de course extrêmement réduite. Il s'ensuit que la seule différence entre deux distributeurs de calibre différents réside dans leur dimension mesurée parallèlement à l'axe de leur tiroir alors que dans les modules de distribution classiques associables, le changement de calibre se traduit par un changement de dimensions dans les trois orientations de l'espace, ce qui rend impossible l'association de modules de calibres différents sauf à prévoir des pièces d'adaptation entre eux qui sont inesthétiques et qui augmentent encore l'encombrement d'un ensemble modulaire qui les incorporent.

De manière également préférée, le rapport entre les deux dimensions d'un orifice de distribution du distributeur de plus petit calibre selon l'invention est compris entre 1 à 15 et 1 à 20 et l'espace entre deux orifices adjacents est au moins égal à la plus petite dimension de ces orifices.

Ces valeurs ont été trouvées après de nombreux tâtonnements et sont optimales de sorte que la différence de course du tiroir entre les deux calibres ayant au moins un rapport de deux entre leur section de passage, est en valeur absolue la plus petite possible, en conservant quels que soient les calibres, les qualités de contact du patin sur la paroi pourvue des orifices de distribution tout-à-fait correcte. On arrive ainsi à diminuer au maximum la différence d'encombrement entre deux distributeurs de calibres différents et donc d' obtenir un ensemble modulaire extrêmement compact.

D'autres caractéristiques et avantages de l'invention ressortiront de la description donnée ci-après de quelques exemples de sa réalisation.

Il sera fait référence aux dessins annexés parmi lesquels :
- la figure 1 est une vue extérieure schématique d'un exemple d'ensemble modulaire selon l'invention,
- la figure 2 est une coupe transversale courante de cet ensemble,
- la figure 3 est une coupe longitudinale de deux modules de calibres différents juxtaposés dans un ensemble modulaire,
- la figure 4 est une vue en plan de la paroi de distribution des distributeurs de calibres différents mis en oeuvre dans les modules de la figure 3,
- la figure 5 est un schéma en coupe illustrant l'association des embases,
- les figures 6, 7 et 8 sont des schémas en coupe transversale des diverses embases qu'il est possible de mettre en oeuvre pour réaliser trois types d'ensembles modulaires selon l'invention, ces embases étant représentées équipées de leurs distributeurs et des électrovannes de pilotage de ces derniers.

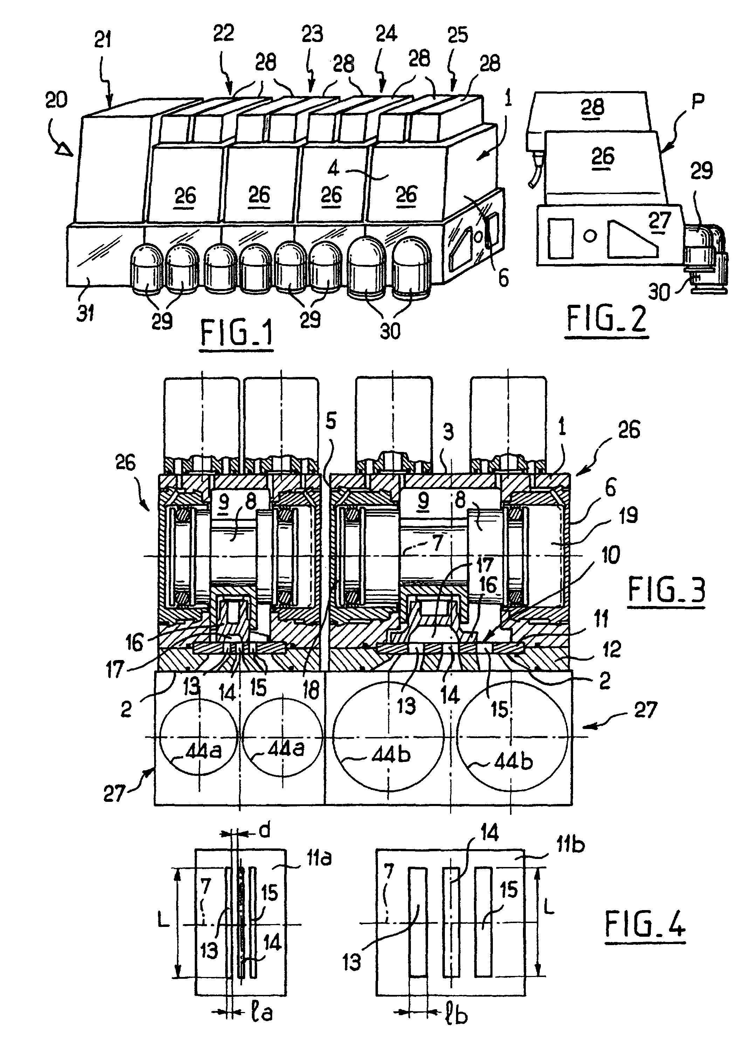

On rappellera tout d'abord la structure d'un distributeur à tiroir plan. Un tel distributeur comporte un corps 1 de forme extérieure généralement parallélépipèdique et qui est limité par une face inférieure 2 destinée à son association à son embase, une face supérieure 3 sur laquelle peuvent être montées des électrovannes de pilotage, une face de façade 4 et deux faces d'extrémité 5 et 6 (figures 1 et 3). Ce corps 1 est pourvu d'un évidement intérieur qui comporte des portées cylindriques de guidage d'axe 7 sensiblement perpendiculaire aux faces d'extrémité 5 et 6 dans lesquelles est monté un tiroir 8. Entre les deux portées de guidage du tiroir, l'évidement intérieur du corps 1 forme un chambrage 9 qui est limité par une paroi latérale dont une partie présente une surface plane 10 tournée vers l'intérieur du chambrage 9. De manière connue, cette surface 10 est en fait portée par une plaque ou glace de distribution 11 insérée dans le corps 1 entre la partie principale de celui-ci et une semelle de distribution 12, cette glace de distribution 11 étant sensiblement parallèle à la face 2 d'association du distributeur avec son embase.

Cette glace de distribution 11 possède trois orifices 13, 14 et 15 tandis qu'un patin 16 est associé au tiroir 8 et peut glisser sur la surface 10 de la glace 11. Le patin 16 a pour fonction par un évidement interne 17, selon les positions extrêmes prises par le tiroir le long de son axe 7, d'établir une communication par exemple dans une première position entre les orifices 13 et 14 de distribution, cette communication étant isolée du chambrage 9 et de découvrir le dernier orifice 15 pour qu'il soit en permanence soumis à la pression qui règne dans le chambrage 9. Un orifice non représenté aux figures réalise une communication permanente entre le chambrage 9 et une source de pression, via par exemple un conduit commun d'alimentation en fluide sous pression de tous les distributeurs d'un ensemble modulaire qui court dans l'embase. Dans une seconde position du tiroir, l'évidement 17 établit une communication entre les orifices 14 et 15, communication isolée du chambrage 9 tandis que l'orifice 13 est en communication avec le chambrage 9. On comprend que, le chambrage 9 étant relié à une source de pression et l'orifice 14 qui est l'orifice médian étant relié à un canal d'échappement, dans la première position du tiroir l'orifice 13 communique avec cet échappement et la partie de circuit pneumatique qui aboutit à l'orifice 13, notamment au travers de l'embase, est placé en communication avec cet échappement tandis que la partie du circuit pneumatique qui aboutit à l'orifice 15 est mise en pression. Dans l'autre position (celle non représentée du patin), c'est l'orifice 15 donc la partie de circuit pneumatique qui y aboutit qui est mise à l'échappement tandis que l'autre partie du circuit pneumatique aboutissant à l'orifice 13 communique avec la source de pression.

Les changements de position du tiroir 8 sont obtenus, dans le cas de la figure 3, par la mise sélective en pression ou à l'échappement des chambres de pilotage 18 et 19 qui sont ménagées dans le corps 1 aux extrémités du tiroir 8. L'alimentation ou la mise en échappement de chacune de ces chambres est assurée par les électrovannes de pilotage.

Dans le cas de la figure 3, on a représenté des distributeurs à tiroir plan bistables. Bien entendu l'invention concerne également des distributeurs à tiroir plan ne possédant qu'une chambre de pilotage qui coopère avec une seule extrémité du tiroir 8 tandis que son autre extrémité est soumise à un ressort de rappel tendant à rappeler le tiroir 8 toujours dans la même position. Il s'agit alors de distributeurs monostables. Dans le cas de distributeurs bistables, il faut deux électrovannes pour piloter le tiroir alors que dans le cas d'un distributeur monostable une seule électrovanne suffit. On remarquera sur cette figure 3 que sur l'embase 27 associée au distributeur de petit calibre, on a fait figurer des orifices de sortie 44a de diamètre inférieur à ceux semblables 44b de l' embase associée au distributeur de plus grand calibre.

L'ensemble modulaire 20 de la figure 1 comporte cinq modules associés, à savoir un module d'entrée 21, trois modules de petit calibre 22, 23, 24 et un module de calibre plus important 25. En dehors du module d'entrée 20, les modules 22 à 25 comprennent chacun un distributeur à tiroir plan 26, une embase 27 et deux électrovannes 28 dans le cas de distributeurs bistables ou une électrovanne et un capot (également noté 28 sur la figure 2) dans le cas de distributeurs monostables.

Les modules de petit calibre possèdent chacun au niveau de l'embase deux sorties de petit diamètre symbolisées par des raccords coudés 29. Le module de grand calibre 25 possède deux sorties de plus gros diamètre symbolisées par les raccords coudés 30. On constate à la figure 1 et à la figure 2 qui est une coupe transversale de l'ensemble modulaire à l'extérieur du module d'entrée, que la seule différence qui existe entre un module 22, 23, 24 de petit calibre et un module 25 de gros calibre réside dans la dimension de chaque module mesurée dans la direction d'association et dans l'encombrement des raccords qui y sont associés.

La figure 2 fait bien apparaître cette seule différence puisque le profil P de chaque module qu'il soit de petit ou de grand calibre, est strictement identique.

Ces figures montrent tout l'intérêt des mesures selon l'invention qui permettent de construire des modules de calibres différents en ne modifiant qu'une seule des trois dimensions de ces modules. Cet intérêt est déjà d'ordre esthétique et il est surtout d'ordre pratique et fonctionnel car il permet de réaliser un ensemble modulaire avec, au niveau des embases, une correspondance assurée de tous les conduits communs de pression d'échappement et le cas échéant, des conducteurs électriques par simple juxtaposition et association de ces embases par des moyens très simples du genre vis.

L'identité des profils transversaux de modules de calibres différents permettant donc leur association dans un seul ensemble modulaire homogène trouve sa source dans une amélioration des dispositions constructives des distributeurs à tiroir plan.

L'une de ces dispositions constructives se situe au niveau de la glace 11 de distribution. En effet, la figure 4 illustre par une vue de dessus chacune des glaces de distribution 11a à la gauche de la figure pour un distributeur de petit calibre et 11b à la droite de ceux-ci pour un distributeur de calibre plus important. On remarquera sur cette figure que les orifices 13, 14 et 15 prévus dans ces glaces sont en forme de lumières allongées dont la plus grande dimension L est orthogonale à l'axe 7 du tiroir 8. Cette plus grande dimension est identique quel que soit le calibre du distributeur. Comme la section des orifices 13, 14 et 15 détermine le calibre de ce distributeur, on comprend qu'en changeant la valeur de la section de ces orifices, on change le calibre du distributeur et il suffit de jouer sur la largeur des orifices 13, 14 et 15 pour modifier leur section de passage. Dans le cas de la figure 4, la largeur 1a des orifices de la glace 11a est trois fois plus petite que la largeur 1b des orifices de la glace 11b. A titre d'exemple chiffré, la est égal à 0,8 mm, 1b à 2,4 mm, l'espace inter-orifices d est large de 0,9 mm pour le distributeur de petit calibre et de 2,4 mm pour le distributeur de grand calibre, la longueur L étant de 15 mm. Les sections de passage interne sont donc respectivement de 12 et 36 mm².

C'est pour minimiser l'influence de la largeur des orifices sur les dimensions totales du distributeur que la plus grande dimension des orifices est perpendiculaire à la direction de cette course. Après de nombreux tâtonnements, on s'est rendu compte qu'on parvenait à une solution optimale sur le plan de l'encombrement des distributeurs en choisissant un rapport entre la largeur et la longueur des orifices du distributeur de plus petit calibre compris entre 1 à 15 et 1 à 20 avec, pour ce distributeur, une largeur d'espace d inter-orifices sensiblement égale par valeur supérieure à la largeur des orifices 1a.

Cette solution est également optimale sur le plan des orifices 44a, 44b (figure 3) d'implantation des raccords pour les tubes de liaison de l'embase à l'actionneur. En effet, et notamment pour le mode de réalisation préféré de l'invention à deux calibres, la dimension de l'embase de fort calibre mesurée selon l'axe 7 est environ 50 % plus grande que cette même dimension pour l'embase de petit calibre, ce qui autorise de manière harmonieuse de prévoir des orifices d'implantation de raccord de tubes de diamètre intérieur 7 mm pour l'embase la plus longue et des orifices pour raccord de tube de diamètre intérieur 4 mm pour l'embase la plus courte.

On voit de ce qui précède que la différence des sections de passage entre deux calibres différents n'a aucune influence sur, par exemple, la dimension du patin mesurée dans le sens de la longueur des orifices, le diamètre du tiroir, l'espacement du tiroir et de la glace, ..., et que toutes les différences dimensionnelles qu'induit un changement de calibre sont orientées dans une seule direction, à savoir le sens de l'axe du tiroir. En ayant orienté l'axe du tiroir dans la direction d'assemblage des modules pour faire un ensemble, on peut disposer d'éléments d'embases de section transversale uniforme pour des calibres différents, leur seule dimension différente étant prise dans la direction d'assemblage de l'ensemble modulaire.

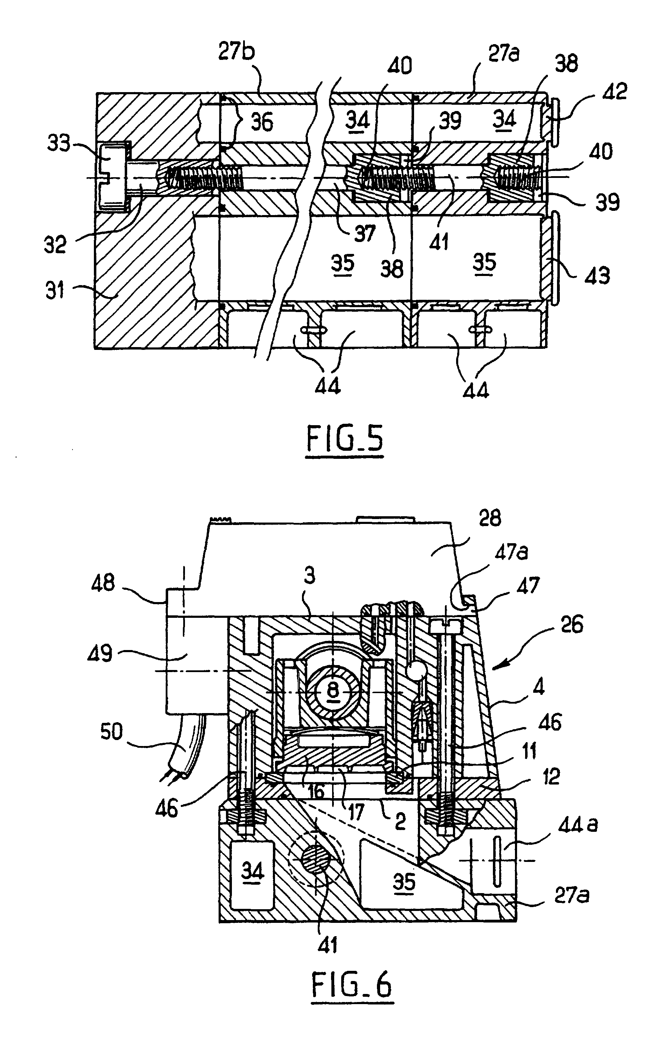

La figure 5 illustre d'ailleurs par un schéma en coupe des embases, par un plan horizontal parallèle à la direction des tiroirs des distributeurs, appartenant à un ensemble modulaire comprenant un module d'entrée et des modules de calibres différents. Dans cette figure on n'a pas détaillé l'embase 31 du module d'entrée qui comporte les moyens d'entrée et de départ des conduits communs de pression et d'échappement ainsi que, le cas échéant, des conducteurs électriques. On notera simplement que cette embase est pourvue d'un écrou 32 en forme de manchon tubulaire taraudé à l'une de ses extrémités et comportant à son autre extrémité une tête de manoeuvre 33. L'embase 27b correspondant à un module de fort calibre est bien entendu traversée par un tronçon 34 de conduit commun d'alimentation en pression de chacun des distributeurs et d'un tronçon 35 de conduit commun de collecte de l'échappement de ces distributeurs. L'association de cette embase 27b à l'embase du module d'entrée 31 est assurée par contact plan sur plan avec des joints d'étanchéité 36 au moyen d'une vis 37 possédant une tête 38 noyée dans un logement approprié prévu dans l'embase, cette vis 37 étant alignée avec l'écrou 32 de l'embase 31 de manière à pouvoir s'y visser. Cette tête possède une fente de manoeuvre 39 et un taraudage 40 de la vis 41 d'assemblage de l'embase suivante 27a qui correspond par exemple à un module de petit calibre.

Cette embase 27a est également pourvue des tronçons de conduits communs 34 et 35 et la vis 41 est identique à la vis 37 à sa longueur près.

On aura noté que l'embase 27a constitue l'embase terminale de l'ensemble modulaire selon l'invention et, à cet effet, a conservé des obturateurs 42, 43 qui ferment les conduits communs pneumatiques. Ces obturateurs 42, 43 sont détachables et si l'embase 27a avait à être insérée entre deux modules dans un ensemble modulaire, préalablement à son assemblage, on aurait retiré par sectionnement de leur attache au corps de l'embase, les obturateurs 42 et 43 comme on l'a fait pour l'embase 27a. Ainsi, toute embase de module selon l'invention possède-t-elle des obturateurs 42 et 43 avant son premier usage situés sur sa face pourvue du logement de la tête de vis d'assemblage. L'embase est d'ailleurs livrée avec ses obturateurs et sa vis montée par exemple de manière imperdable dans l'alésage qui l'accueille.

A la figure 6 on a représenté en coupe perpendiculaire à l'axe du tiroir, un module de petit calibre dans lequel l'embase 27a n'a pour fonction que d'assurer les communs 34 et 35 pneumatiques pour l'ensemble modulaire et de prévoir des conduits internes entre sa face d'association avec le module et les orifices de sortie 44a pour raccorder chaque module à l'actionneur (vérin) qu'il doit commander. Cette embase se résume à une simple pièce parallélépipédique qui offre une surface de pose pour la face 2 d'un distributeur 26 qui y est rapporté au moyen de deux vis 45 et 46 prenant en sandwich la semelle 12, la glace 11 et le corps 1 de ce distributeur. Le distributeur supporte quant à lui une ou deux électrovannes 28 pour son pilotage sur sa face supérieure 3.

L'électrovanne 28 possède à l' une de ses extrémités un talon 47 qui est logé dans un orifice 47a prévu au sommet du distributeur au voisinage de sa paroi frontale 4, tandis que son autre extrémité 48 déborde à l'extérieur du distributeur pour recevoir des moyens de fixation 49 au distributeur et d'où partent des fils 50 de connexion.

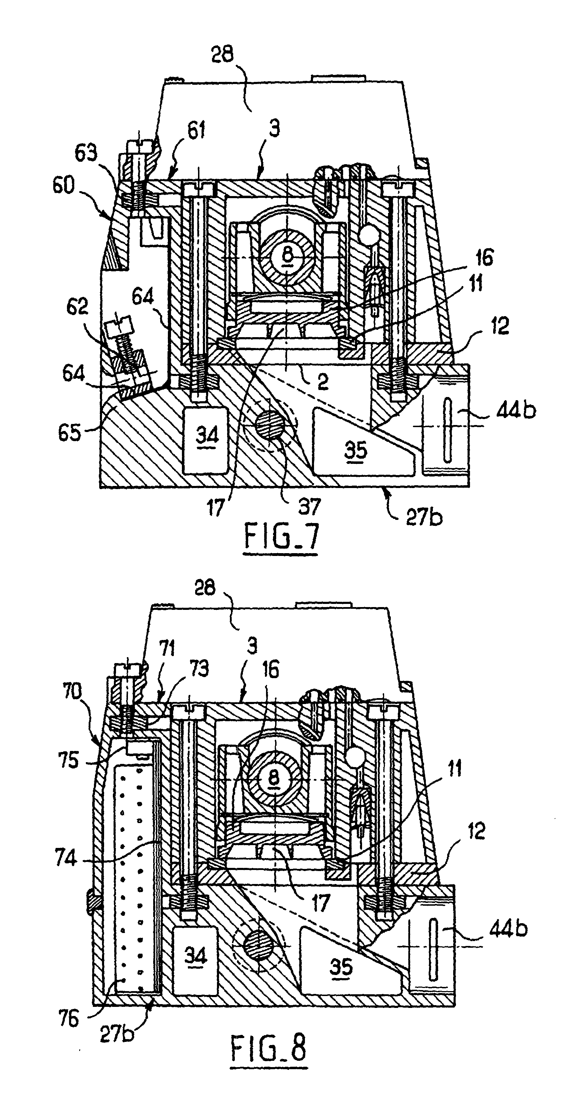

Dans les deux autres modes de réalisation représentés aux figures 7 et 8 d'une embase selon l'invention associée à un distributeur et à des électrovannes, c'est un module de plus grand calibre qu'on a choisi d'illustrer. Des différences que l'on constate entre ces modules de gros calibre et le module de petit calibre de la figure 6 résident dans le diamètre des orifices 44 destinés à recevoir d'une part les petits raccords coudés 29 et d'autre part les raccords 30 de diamètre plus important et dans le volume de l'évidement 17 du patin 16 du distributeur à tiroir plan. On constate en effet qu'aux figures 7 et 8 la voûte de pontage que forme le patin au-dessus des lumières de la glace 11 est plus profonde que celle représentée à la figure 6.

Dans ces deux modes de réalisation, l'embase présente une partie 27b de base de section en tous points semblable à l'embase 27a ci-dessus décrite (à l'exception du diamètre des orifices de sortie 44b), et un retour arrière 60, 70 qui remonte perpendiculairement à la surface de pose du distributeur et parallèlement à l'axe de son tiroir le long de la façade arrière du distributeur pour présenter une surface supérieure 61, 71 au même niveau que le niveau de la surface supérieure 3 du distributeur. Cette surface prolonge ainsi le plan de pose de l'électrovanne 28. Cette électrovanne peut être assujettie à l'embase au travers de cette surface au moyen d'une vis 51 coopérant avec un écrou noyé 63, 73.

A la figure 7 le retour 60 est équipé de conducteurs électriques 64 qui coopèrent avec les broches de l'électrovanne 28, ces conducteurs 64 étant ramenés sur un rebord 65 du retour 60 qui porte des bornes de connexion 62 pour les fils d'alimentation de l'électrovanne 28.

A la figure 8, le retour 70 forme en fait un canal latéral sur la façade arrière du module dans lequel on peut accommoder un circuit imprimé 74, un connecteur 75 destiné à recevoir les broches inférieures de l'électrovanne 28 et un connecteur multibroches 76 permettant la liaison électrique de chacun des modules successifs.

La description ci-dessus est relative au mode préféré de réalisation de l'invention dans lequel la section de passage interne du distributeur de plus petit calibre est de 12 mm² et dans lequel il n'existe que deux calibres différents pour constituer une gamme.

D'autres réalisations de l'invention sont possibles. Il sera cependant avantageux pour chacune d'elles de comprendre le distributeur de plus petit calibre identique à celui décrit ci-dessus, c'est-à-dire avec une section de passage interne de 12 mm². C'est en effet celui qui sera le plus souvent intégré dans l'ensemble modulaire, compte tenu de la majorité des besoins en débit d'une installation pneumatique automatisée. A titre indicatif, on indiquera que sa longueur mesurée selon l'axe de son tiroir est de l'ordre de 22 mm. A ce module on pourra alors adjoindre d'autres modules de calibres plus importants par exemple de section interne 30 mm² et 48 mm² voire plus. Ces modules auront nécessairement une dimension selon la direction d'assemblage (celle du tiroir) plus importante que celle du module de plus petit calibre. On pourra prévoir une valeur spécifique de cette dimension pour chacun des deux ou trois modules supplémentaires, ce qui exige de concevoir chaque composant de manière spécifique. Mais, comme la fréquence de leur présence dans un ensemble est globalement faible (moins du quart de celle du petit module), la valeur de cette dimension a une influence minime sur la longueur d'un ensemble de module. C'est ainsi que pour tous les modules autres que le plus petit, dans ces autres modes de réalisation, la dimension considérée peut être identique et égale à celle du plus grand module. Dans ce cas on peut bénéficier d'une fabrication très standardisée de ces modules complémentaires au petit module. En effet, tous les composants du distributeur peuvent être identiques à ceux prévus pour le plus gros calibre, à l'exception de la glace pourvue des orifices de distribution qui différera d'un module à l'autre uniquement par la largeur et la position relative des lumières qui forment ces orifices. Une autre variation d'un module à l'autre résidera dans le diamètre des orifices de logement des raccords. A ce propos, on notera que le plus gros module déterminera l'épaisseur de l'embase (sa dimension perpendiculaire au plan de pose du distributeur) et donc l'épaisseur de l'embase du plus petit module.

## Revendications

1. Ensemble modulaire de distribution pneumatique comportant une pluralité de modules (22, 23, 24, 25), chacun formé par un distributeur pneumatique (26) fixé à une embase (27) qui comprend au moins un tronçon de conduit commun de pression et un tronçon de conduit commun d'échappement et des moyens de fixation à une embase adjacente, **caractérisé en ce que** chaque distributeur (26) est un distributeur à tiroir plan, communiquant avec l'embase (27) au travers de trois orifices de distribution (13, 14, 15) et d'un orifice de pression, dont l'axe (7) du tiroir (8) est parallèle à la direction des conduits communs de pression et d'échappement (34, 35) des embases, **en ce qu'**au moins deux distributeurs (26) de l'ensemble sont de calibres différents, l'un ayant des orifices de distribution d'une section au moins égale à deux fois la section des orifices de distribution de l' autre, et **en ce que** le profil extérieur (P) de la section de chaque module par un plan perpendiculaire à l'axe de son tiroir est identique quel que soit le calibre du distributeur.

2. Ensemble modulaire selon la revendication 1, **caractérisé en ce que** les orifices (13, 14, 15) de distribution de chaque distributeur situés en regard de l'embase (27) sont en forme de lumière allongée dont la plus grande dimension (L) est orthogonale à l'axe (7) du tiroir et est identique pour les distributeurs de calibres différents, la largeur (1b) des lumières d'un distributeur de l'ensemble étant au moins double de celle des lumières (1a) du distributeur de plus petit calibre.

3. Ensemble modulaire selon la revendication 2, **caractérisé en ce que**, dans le distributeur de plus petit calibre, le rapport des deux dimensions L/1a d'un orifice de distribution (13, 14, 15) est compris entre 1 à 15 et 1 à 20, et **en ce que** la largeur de l'espace inter-orifices (d) est sensiblement égale par valeur supérieure à la largeur (1a) d'un orifice de distribution.

4. Ensemble modulaire selon la revendication 3, **caractérisé en ce que** la section d'un orifice de distribution de ce distributeur de plus petit calibre est de 12 mm².

5. Ensemble modulaire selon la revendication 3 ou la revendication 4, **caractérisé en ce que** les embases (27a, 27b) sont reliées au moyen d'une vis (37, 41) à tête (40) taraudée les traversant parallèlement aux tronçons (34, 35) de conduits communs.

6. Ensemble modulaire selon la revendication 5, **caractérisé en ce que** les tronçons (34, 35) de conduits communs de chaque embase sont pourvus à leur extrémité du côté de la tête (40) de vis taraudée, d'un obturateur (42, 43) séparable par sectionnement.

7. Ensemble modulaire selon l'une des revendications 5 et 6, **caractérisé en ce que** chaque embase comporte une semelle (27a, 27b) parallélépipèdique et un retour (60, 70) perpendiculaire à la surface de pose du distributeur correspondant et parallèle à l'axe (7) du tiroir de ce dernier.

8. Ensemble modulaire selon la revendication 7, **caractérisé en ce que** la surface supérieure (61, 71) du retour (60, 70) est au niveau de la surface supérieure (3) du distributeur, le retour étant équipé d'un écrou (63, 73) pour une vis de fixation (49) d'une extrémité d'une électrovanne (28) de pilotage placée sur le distributeur à l'opposé de l'embase et dont une autre extrémité est assujettie au distributeur au moyen d'un talon (47) glissé dans un logement (47a) du corps de ce distributeur.

9. Ensemble modulaire selon la revendication 7 ou la revendication 8, **caractérisé en ce que** le retour (60, 70) forme le support de moyens de connectique électrique (75, 76) entre les différents modules associés et entre l'électrovanne et chaque module.

## Claims

1. A modular pneumatic distribution assembly comprising a plurality of modules (22, 23, 24, 25), each formed by a pneumatic distributor (26) fixed on a base (27) which comprises at least one common length of pressure duct and at least one common length of exhaust duct, and means for fixing to an adjacent base, the assembly being **characterized in that** each distributor (26) is a distributor having a flat slide distributor communicating with the base (27) via three distribution orifices (13, 14, 15) and a pressure orifice, the axis (7) of the slide mechanism (8) being parallel to the direction of the common pressure and exhaust ducts (34, 35) in the bases, **in that** at least two distributors (26) of the assembly are of different calibers, one having distribution orifices of a section that is at least twice the section of the distribution orifices of the other, and **in that** the outside profile (P) of the section of each module on a plane perpendicular to the axis of the slide mechanism is identical regardless of the caliber of the distributor.

2. A modular assembly according to claim 1, **characterized in that** the distribution orifices (13, 14, 15) of each distributor situated facing the base (27) are in the form of elongate slots of long dimension (L) orthogonal to the axis (7) of the slide mechanism that is identical for the distributors of different calibers, the width (1_{b}) of the slots of at least one distributor of the assembly being at least twice the width of the slots (1ₐ) of the smallest-caliber distributor.

3. A modular assembly according to claim 2, **characterized in that** in the smallest-caliber distributor the ratio of the two dimensions (1ₐ/L) of a distribution orifice (13, 14, 15) lies in the range 1:15 to 1:20, and **in that** the width of the inter-orifice space (d) is substantially equal to or greater than the width (1ₐ) of a distribution orifice.

4. A modular assembly according to claim 3, **characterized in that** the section of a distribution orifice of the smallest caliber distributor is 12 mm².

5. A modular assembly according to claim 3 or claim 4, **characterized in that** the bases (27a, 27b) are interconnected by means of a screw (37, 41) having a tapped head (40) passing through the bases parallel to the common duct segments (34, 35) thereof.

6. A modular assembly according to claim 5, **characterized in that** the common duct segments (34, 35) in each base are provided at their tapped screw head ends with shutter means (42, 43) that can be removed therefrom by being sectioned.

7. A modular assembly according to claim 5 or 6, **characterized in that** each base has a soleplate (27a, 27b) in the form of a rectangular parallelepiped and a back piece (60, 70) extending perpendicularly to the surface on which the corresponding distributor is placed and parallel to the axis (7) of the slide mechanism thereof.

8. A modular assembly according to claim 7, **characterized in that** the top surface (61, 71) of the back piece (60, 70) is level with the top surface (3) of the distributor, the back piece being fitted with a nut (63, 73) for receiving a fixing screw (49) at one end of an electrically-controlled pilot valve (28) placed on the distributor at its end remote from the base and having the other end of the electrically-controlled valve secured to the distributor by means of a tab (47) slid into a housing (47a) in the body of said distributor.

9. A modular assembly according to claim 7 or claim 8, **characterized in that** the back piece (60, 70) forms a support for electrical connector means (75, 76) for making connections between the various modules that are associated together and between the electrically-controlled valves and the modules.

## Patentansprüche

1. Modulare Pneumatikventilanordnung, umfassend eine Vielzahl von Modulen (22, 23, 24, 25), die jeweils aus einem Pneumatikventil (26) gebildet sind, das an einer Basis (27) befestigt ist, die mindestens einen gemeinsamen Druckleitungsabschnitt und einen gemeinsamen Auslaßleitungsabschnitt sowie Mittel zu ihrer Befestigung an einer angrenzenden Basis umfaßt, **dadurch gekennzeichnet, daß** jedes Ventil (26) ein Wegeventil mit Flachschieber ist, das mit der Basis (27) über drei Ventilöffnungen (13, 14, 15) und einer Drucköffnung in Verbindung steht, wobei die Achse (7) des Schiebers (8) parallel zur Richtung der gemeinsamen Druck- und Auslaßleitungen (34, 35) der Basen ist, daß mindestens zwei Wegeventile (26) der Anordnung unterschiedliche Durchmesser haben, wobei eines Ventilöffnungen mit einem Querschnitt hat, der wenigstens gleich dem zweifachen Querschnitt der Ventilöffnungen des anderen Wegeventils ist, und daß das Außenprofil (P) des Querschnitts jedes Moduls in einer zur Achse seines Schiebers senkrechten Ebene unabhängig vom Durchmesser des Wegeventils identisch ist.

2. Modulare Anordnung nach Anspruch 1, **dadurch gekennzeichnet, daß** die Ventilöffnungen (13, 14, 15) jedes Wegeventils, die sich gegenüber der Basis (27) befinden, die Form eines länglichen Schlitzes haben, dessen größte Abmessung (L) orthogonal zur Achse (7) des Schiebers und für die Ventile mit unterschiedlichen Durchmessern identisch ist, wobei die Breite (lb) der Schlitze eines Wegeventils der Anordnung wenigstens das Doppelte der Breite der Schlitze (la) des Wegeventils mit dem kleinsten Durchmesser beträgt.

3. Modulare Anordnung nach Anspruch 2, **dadurch gekennzeichnet, daß** in dem Wegeventil mit dem kleinsten Durchmesser das Verhältnis der beiden Abmessungen L/la einer Ventilöffnung (13, 14, 15) zwischen 1 zu 15 und 1 zu 20 liegt, und daß die Breite des Zwischenraumes (d) zwischen den Öffnungen im wesentlichen gleich oder geringfügig größer als die Breite (la) einer Ventilöffnung ist.

4. Modulare Anordnung nach Anspruch 3, **dadurch gekennzeichnet, daß** der Querschnitt einer Ventilöffnung dieses Wegeventils mit dem kleinsten Durchmesser 12 mm² beträgt.

5. Modulare Anordnung nach Anspruch 3 oder Anspruch 4, **dadurch gekennzeichnet, daß** die Basen (27a, 27b) mittels einer Schraube (37, 41) mit Gewindekopf (40) verbunden sind, die sie parallel zu den gemeinsamen Leitungsabschnitten (34, 35) durchsetzt.

6. Modulare Anordnung nach Anspruch 5, **dadurch gekennzeichnet, daß** die gemeinsamen Leitungsabschnitte (34, 35) jeder Basis an ihrem Ende auf der Seite des Gewindekopfes (40) jeweils mit einem Verschlußstopfen (42, 43) versehen sind, der durch Abschneiden entfernbar ist.

7. Modulare Anordnung nach einem der Ansprüche 5 und 6, **dadurch gekennzeichnet, daß** jede Basis eine parallelepipedförmige Sohle (27a, 27b) und eine Rückwand (60, 70) hat, die senkrecht zur Standfläche des entsprechenden Wegeventils und parallel zur Achse (7) des Schiebers dieses letztgenannten ist.

8. Modulare Anordnung nach Anspruch 7, **dadurch gekennzeichnet, daß** die Oberseite (61, 71) der Rückwand (60, 70) sich auf der Höhe der Oberseite (3) des Wegeventils befindet, wobei die Rückwand mit einer Mutter (63, 73) für eine Schraube (49) zur Befestigung eines Endes eines Pilot-Magnetventils (28) ausgestattet ist, das auf dem Wegeventil gegenüber der Basis plaziert und dessen anderes Ende am Wegeventil mittels eines Absatzes (47) fixiert ist, der in eine Aufnahme (47a) des Gehäuses dieses Wegeventils eingeschoben ist.

9. Modulare Anordnung nach Anspruch 7 oder Anspruch 8, **dadurch gekennzeichnet, daß** die Rückwand (60, 70) den Träger für die Mittel zur elektrischen Verbindung (75, 76) zwischen den verschiedenen verbundenen Modulen und zwischen dem Magnetventil und jedem Modul bildet.
